(19) Europäisches Patentamt
European Patent Office
Office européen des brevets

(11) **EP 2 367 305 A1**

(12) **EUROPEAN PATENT APPLICATION**

(43) Date of publication:
**21.09.2011 Bulletin 2011/38**

(51) Int Cl.:
**H04B 10/18** *(2006.01)*

(21) Application number: **11158335.7**

(22) Date of filing: **15.03.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Seve, Emmanuel**<br>  **91620 Nozay (FR)**<br>• **Antona, Jean-Christophe**<br>  **91620 Nozay (FR)** |
| (30) Priority: **18.03.2010  FR 1051950** | (74) Representative: **Keseris, Denis**<br>**ALCATEL LUCENT**<br>**Bâtiment Bourgognes**<br>**32 avenue Kléber**<br>**92707 Colombes Cedex (FR)** |
| (71) Applicant: **Alcatel Lucent**<br>**75007 Paris (FR)** | |

(54) **METHOD AND SYSTEM FOR COMPENSATING CHROMATIC DISPERSION IN AN HETEROGENOUS OPTICAL TRANSMISSION LINE**

(57)     An optical line (40) connecting a first node (41) and a second node (52) of a transparent network, comprising
- a first sub-line (50) made up of a first plurality of segments (43) of optical fiber of a first type,
- at least one second sub-line (51) composed of a second plurality of segments (53) of optical fiber of a second type different from the first type,
- an initial dispersion compensation device (44) placed at the start of the line and exhibiting an initial compensation value,
- at least one median dispersion compensation device (47) placed between each pair of successive sub-lines (50, 51), and
- a final dispersion compensation device (56) placed at the end of the line,
-in which the initial compensation value is a linear combination of the initial compensation values of the sub-lines (50, 51) as optimized for said sub-lines which are used alone.

FIG. 5

**Description**

The present invention concerns the management of dispersion and compensation for an optical line, which may be used in a transparent optical network.

In the field of optical lines, it is known how to mitigate the joint effects of chromatic dispersion and Kerr nonlinearities by means of compensation devices, in order to make it possible to construct lengthy optical lines without an opto-electronic regeneration device.

Compensation is preferentially determined, for a homogeneous line comprising a single type of optical fiber, depending on its dispersion. However, successive updates of optical networks often lead to heterogeneous optical lines comprising different types of optical fiber.

The object of the present invention is to propose a strategy for determining which compensations to apply to a heterogeneous optical line.

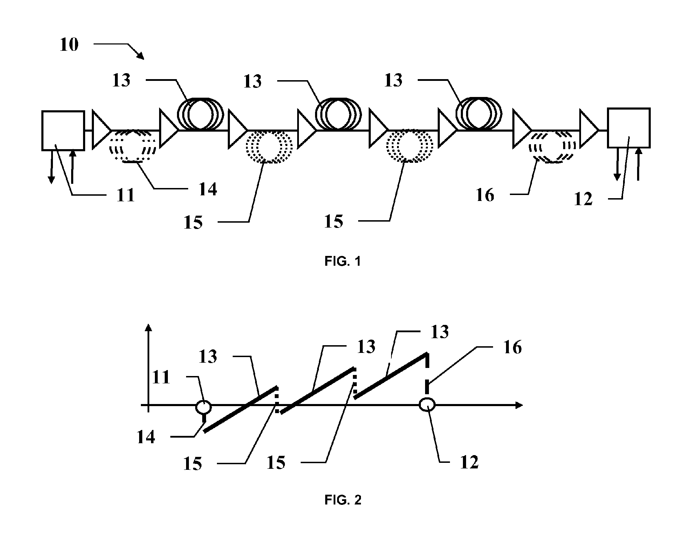

As depicted in Figure 1, a typical homogenous optical line 10 connects a first node 11 to a second node 12 of a transparent network. Said optical line 10 comprises a plurality of segments 13 of a single type of optical fiber, connected in succession. A "type of optical fiber" may, for example, refer to SMF (Single Mode Fiber) or LEAF (Low Effective Area Fiber) optical fibers. Along each of said segments 13, a (positive) dispersion inevitably occurs. In order to compensate for this dispersion, it is already known for a homogenous optical line 10 to carry out compensation at three levels: initial, intermediate, and final. Each compensation is carried out by at least one compensation device. A compensation device is, for example, constructed by means of at least one segment of a particular DCF (Dispersion Compensating Fiber) optical fiber, which advantageously exhibits a negative dispersion. The resulting compensation value may be adapted by varying the length of said DCF.

Initial compensation or pre-compensation is distracted by placing an initial dispersion compensation device at the start of the line 10, between the output of the first node 11 and the first segment 13 of said plurality, exhibiting an initial compensation value $PRE_{HO}$.

An intermediate compensation is regularly carried out by interspersing between each pair of successive segments 13 an intermediate dispersion compensation device 15, exhibiting an intermediate compensation value $INT_{HO}$.

Finally, a final compensation is carried out by placing a final dispersion compensation device 16 at the end of the line between the last segment 13 of said plurality and the input of the second node 12, exhibiting a final compensation value $POST_{HO}$.

In a known manner, the initial compensation value, $PRE_{HO}$, the intermediate compensation value, $INT_{HO}$, which is common to all intermediate devices 15, and the final compensation value, $POST_{HO}$, are determined, for a given homogenous optical line 10, by means of calculations carried out in a simulation, so as to optimize the transmission quality, under wavelength and power conditions indicative of actual usage. Optimization thereby determines an initial compensation value, $PRE_{HO}$, and an intermediate compensation value, $INT_{HO}$, which minimize a quality criterion. The final compensation value, $POST_{HO}$, is determined such that the dispersion is canceled out within the second node 12. The quality criterion is, for example, a minimum bit error rate (BER). The abbreviation HO is used for a homogenous line.

The dispersion diagram of Figure 2 summarizes, for the optical line 10 of Figure 1, the change in total dispersion, shown on the y-axis, as a function of the curvilinear abscissa of the optical line 10, shown on the x-axis.

When an optical line 20 comprises segments 23, 33 of different types of optical fiber, the preceding method should be changed. A heterogeneous optical line 20, containing different types of optical fiber (SMF, LEAF) can always be broken down into a succession of sub-lines 30, 31, each sub-line 30, 31 being a homogeneous optical line. To perform this breakdown, it is necessary and sufficient to start a new sub-line provided that the type of optical fibers that a segment 23, 33 has, except for DCF segments used as compensation devices, changes the type of optical fiber.

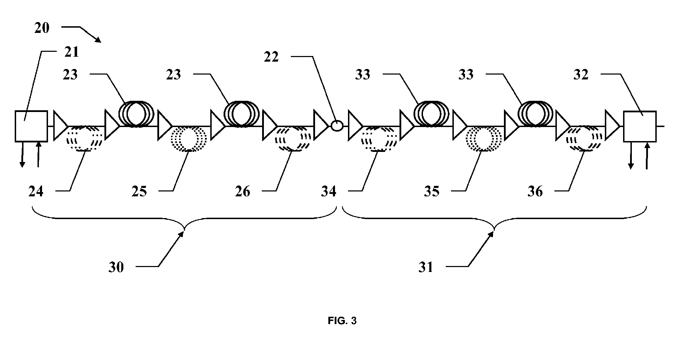

Figure 3 illustrates one example of such a heterogeneous optical line 20 connecting a first node 21 to a second node 32. In a nonlimiting fashion for the sake of simplicity, this heterogeneous optical line 20 is depicted as comprising two sub-lines 30, 31.

A known method for determining the compensations for a heterogeneous optical line 20 consists of going back to the previous problem by breaking a heterogeneous line 20 down into a number n of homogeneous and independent sub-lines 30, 31, for which the previously used method for a homogeneous line may be applied. To do so, it is assumed that a virtual node 22 is interspersed between each pair of sub-lines 30, 31, with the compensation canceling out within that virtual node 22.

Thus, each sub-line 30, 31, is a homogeneous line in the sense of the one previously described, and the preceding method may be applied in order to determine for each sub-line 30, 31 (SL1, SLi, SLn), respectively, an initial compensation device 24, 34, with respective values $PRE_{SL1}$, $PRE_{SLi}$, $PRE_{SLn}$, an intermediate compensation device 25, 35, with respective values $INT_{SL1}$, $INT_{SLi}$, $INT_{SLn}$, and a final compensation device 26, 36, with respective values $POST_{SL1}$, $POST_{SLi}$, $POST_{SLn}$.

However, within each interface 22 between two successive sub-lines 30, 31, it is necessary to place two compensating devices 26, 34. In terms of number of components, this requires junctions which are always sources of loss, and if appropriate, amplifiers or other additional components, which is not economically optimal.

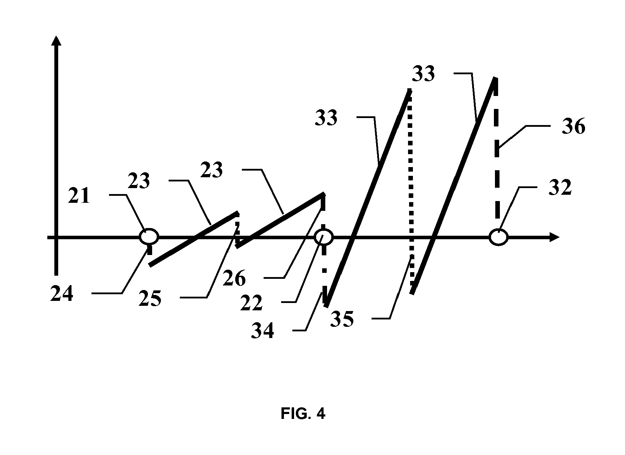

Figure 4 depicts a compensation/dispersion diagram corresponding to the optical line 30 of Figure 3.

The present invention makes up for these drawbacks by disclosing a method for determining compensation values for an optical line connecting a first node and a second node of a transparent network, as well as the optical line obtained in that manner.

Such an optical line comprises:

- a first sub-line made up of a first plurality of optical fiber segments of one type connected in succession by interspersing between each pair of successive segments a first intermediate dispersion compensation device exhibiting a first intermediate compensation value,
- at least one second sub-line made up of a second plurality of optical fiber segments of a type distinct from the type of the immediately previous sub-line, connected in succession by interspersing between each pair of successive segments a second intermediate dispersion compensation device exhibiting a second intermediate compensation value,
- an initial dispersion compensation device disposed at the start of the line between the output of the first node and the first segment of the first sub-line and exhibiting an initial compensation value,
- at least one median dispersion compensation device disposed between each pair of successive sub-lines and exhibiting a median compensation value, and
- a final dispersion compensation device disposed at the end of the line between the last segment of the last sub-line and the input of the second node, and exhibiting a final compensation value.

The method and the optical line are such that the initial compensation value is a linear combination of the initial compensation values of the sub-lines as optimized sub-lines used alone.

According to another characteristic of the method and the optical line, the intermediate compensation value for a sub-line is equal to the intermediate compensation value as optimized for said sub-line used alone.

According to another characteristic of the method and the optical line, the median compensation value is equal to the intermediate compensation value of the immediately previous sub-line.

According to another characteristic of the method and the optical line, the final compensation value is such that the dispersion is canceled out within the second node.

According to another characteristic of the method and the optical line, the weight, within said linear combination, of the initial compensation value of the sub-line is equal to a figure indicative of the dispersion of said sub-line divided by that same figure for the entire line.

According to another characteristic of the method and the optical line, the figure indicative of the dispersion is integrated power.

According to another characteristic of the method and the optical line, the figure indicative of the dispersion is non-linear phase.

According to another characteristic of the method and the optical line, the figure indicative of the dispersion is weighted non-linear phase.

Other characteristics, details, and advantages of the invention will become more clearly apparent from the detailed description given below by way of example with reference to the drawings, in which:

- Figure 1, already described, illustrates a homogeneous optical line,
- Figure 2, already described, illustrates the dispersion/compensation diagram of that same homogenous optical line,
- Figure 3, already described, illustrates a heterogeneous optical line,
- Figure 4, already described, illustrates the dispersion/compensation diagram of that same heterogeneous optical line,
- Figure 5 illustrates a heterogeneous optical line according to the invention,
- Figure 6 illustrates the dispersion/compensation diagram of that same heterogeneous optical line according to the invention.

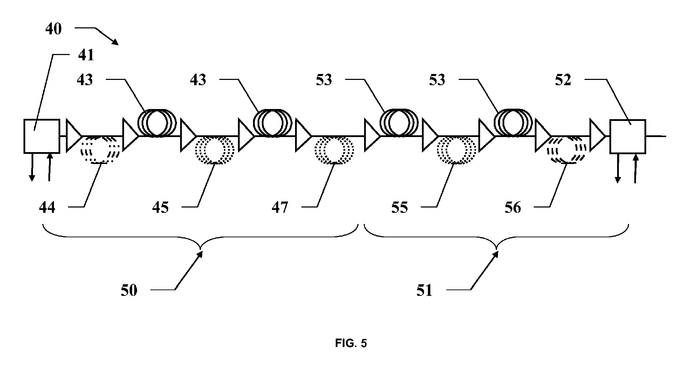

In Figure 5, an optical line 40 connects a first node 41 and a second node 52 of a transparent network and comprises a first sub-line 50 (SL1) made up of a first plurality of optical fiber segments 43 of one type (here LEAF) connected in succession by interspersing between each pair of successive segments 43 a first intermediate dispersion compensation device 45 exhibiting a first intermediate compensation value $INT_{HESL1,}$ at least one second sub-line 51 (SL2, SLi, SLn), whose index i designates a sub-line and is between 1 and n, with HE indicating that the figure refers to a heterogeneous line, made up of a second (or respectively $i^{th}$, $n^{th}$) plurality of optical fiber segments 53 of one type (here SMF) distinct from the previous type of sub-line (here SL1, respectively SLi-1, SLn-1), connected in succession by interspersing between each pair of successive segments 53 a second (or respectively $i^{th}$, $n^{th}$) intermediate dispersion compensation device 55 exhibiting a second (or respectively $i^{th}$, $n^{th}$) intermediate compensation value $INT_{HESL2}$ (or respectively $INT_{HESLi}$, $INT_{HESLn}$).

Thus, the type of optical fiber segments 43, 53, except for DCF segments, is the same within a single sub-line 50, 51, and is different from one sub-line to the next sub-line after it. Two sub-lines exhibiting an identical type may be combined into a single homogeneous sub-line.

Unlike the optical line 20 in Figure 3 compensated according to the method of the prior art, the inventive heterogeneous optical line 40 is compensated, in addition to the intermediate devices 35, 45, by three devices. An initial dispersion compensation device 44 is disposed at the start of the line 40 between the output of the first node 41 and the first segment 43 of the first sub-line 50, which exhibits a single initial compensation value

$PRE_{HE}$. Between each pair of successive sub-lines 50, 51, a single (as opposed to the double compensation device 26 + 34 of the prior art) median dispersion compensation device 47 is interspersed, which exhibits a median compensation value $MED_{HESL1}$ (or respectively $MED_{HESLi}$, $MED_{HELn-1}$). The abbreviation SLi here refers to the sub-line preceding said median device 47. Finally, a final dispersion compensation device 56 is disposed at the end of the line 40 between the last segment 53 of the last sub-line 51 and the input of the second node 52, which exhibits a final compensation value $POST_{HE}$. The abbreviation HE indicates that the figure pertains to a heterogeneous line.

According to one important characteristic of the invention, the initial compensation value $PRE_{HE}$ of the heterogeneous optical line 40 is determined by a linear combination of the respective initial compensation values $PRE_{HOSL1}$, $PRE_{HOSLi}$, $PRE_{HOSLn}$ of sub-lines 50, 51, as optimized for said sub-lines used alone, meaning as optimized if the sub-line were alone between two nodes, as with a homogeneous line. This means that with the formula:

$$PRE_{HE} = \sum_{i=1}^{n} a_i PRE_{HOSLi}$$

where $a_i$ is the coefficient or weight of the linear combination corresponding to the $i^{th}$ sub-line SLi.

The intermediate compensation value $INT_{HESLi}$ of the $i^{th}$ sub-line 50, 51, is assumed to be equal to the intermediate compensation value $INT_{HOSLi}$ as optimized for said sub-line 50, 51, if it were used alone, as a homogeneous line between two nodes is. The result is:

$$\forall i \in [1, n], \quad INT_{HESLi} = INT_{HOSLi}$$

According to one advantageous choice, the median compensation value $MED_{HESLi}$ disposed between the $i^{th}$ and the $i+1^{th}$ sub-line 50, 51, is taken to be equal to the intermediate compensation value $INT_{HESLi}$ of the $i^{th}$ immediately previous sub-line 50. This amounts to directly connecting two consecutive sub-lines 50, 51.

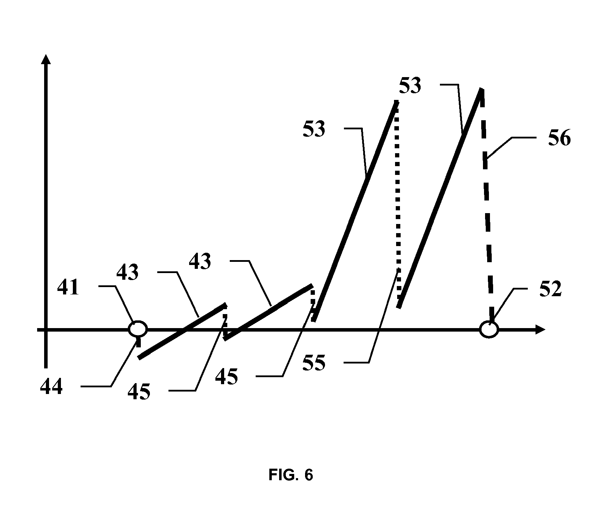

According to one advantageous embodiment, the compensation is such that the total dispersion is cancelled out within the second node 52. The total dispersion value at the end of the last segment 53 of the final sub-line SLn is determined by adding the dispersions of all the segments 43, 53, and of all the compensating devices 44, 45, 55, 57, 56. The dispersion over an optical fiber segment 43, 53 exhibits a known value depending on the type of optical fiber and its length. It is thereby possible to deduce from it a final compensation value $POST_{HE}$ which cancels out the total value of the rest of the optical line 40, in order to cancel out the total dispersion within the second node 52, as depicted in Figure 6.

According to one advantageous characteristic, the weight $a_i$, in the intended linear combination, of the initial compensation value $PRE_{HOSLi}$ corresponding to the $i_{th}$ sub-line 50, 51, is taken to be equal to a figure indicative of the dispersion along said sub-line 50, 51 divided by that same figure determined for the entire line 40. Thus, for a figure G, there is:

$$\forall i \in [1, n], \quad a_i = \frac{G_i}{\sum_{i=1}^{n} G_i}$$

where $G_i$ is the value of the figure G determined for the $i^{th}$ sub-line SLi.

Multiple figures indicative of the dispersion are candidates. A first embodiment uses integrated power. Thus, the weighting coefficient applied for the $i^{th}$ sub-line is determined by dividing the integrated power of the $i^{th}$ sub-line by the integrated power of the complete optical line 40.

In another embodiment, the figure chosen to be indicative of dispersion is non-linear phase.

It is known to the person skilled in the art that non-linear phase $\Phi_{NLSLi}$ for the $i^{th}$ sub-line is defined by the formula

$$\Phi_{NLSLi} = \frac{2\pi}{\lambda} \sum_{k=1}^{K} \frac{n_2 P_{in} L_{eff}}{A_{eff}}$$

, where
$\lambda$ is the central wavelength of the transmission,
$n_2$ is the Kerr coefficient,
$P_{in}$ is the input power per channel,
$L_{eff}$ is the effective length of a segment,
$A_{eff}$ is the effective cross-section of a segment,
$k$ is an index describing from 1 to K all segments that make up the sub-line/line in question.

The sum and the index k, naturally, include both the optical fiber segments 43, 53 and the DCF compensation segments 44, 45, 47, 55, 56.

In another embodiment, the figure chosen to be indicative of dispersion is weighted non-linear phase.

This last embodiment, which is broadly confirmed by many simulations, makes it possible to optimally compensate an optical line 40.

It is known to the person skilled in the art that weighted non-linear phase $\Phi_{WSLi}$, for the $i^{th}$ sub-line is defined by the formula

$$\Phi_{WSLi} = \sum_{k=1}^{K} \frac{\Phi_{NLSLi}}{\Phi_{NLTHSLi}}$$

, where

$\Phi_{NLTHSLi}$ threshold value (TH) of the non-linear phase, determined such that for this non-linear phase value, a 1.5 dB penalty occurs,

k is an index describing from 1 to K all segments that make up the sub-line/line in question.

The sum and the index k, naturally as before, include both the optical fiber segments 43, 53 and the DCF compensation segments 44, 45, 47, 55, 56.

Given the sensitivity of the transmission quality observable over an optical lien as a function of the compensation values adopted, all the values $PRE_{HE}$, $INT_{HESLi}$, $MED_{HESLi}$, and $POST_{HE}$, for each of the compensation devices, are determined with a tolerance of +/-100ps/nm.

**Claims**

1. An optical line (40) connecting a first node (41) and a second node (52) of a transparent network, comprising

   - a first sub-line (50) made up of a first plurality of optical fiber segments (43) of one type connected in succession by interspersing between each pair of successive segments (43) a first intermediate dispersion compensation device (45) exhibiting a first intermediate compensation value,
   - at least one second sub-line (51) made up of a second plurality of optical fiber segments (53) of a type distinct from the type of the immediately previous sub-line, connected in succession by interspersing between each pair of successive segments (53) a second intermediate dispersion compensation device (55) exhibiting a second intermediate compensation value,
   - an initial dispersion compensation device (44) disposed at the start of the line between the output of the first node (41) and the first segment (43) of the first sub-line (50) and exhibiting an initial compensation value,
   - at least one median dispersion compensation device (47) disposed between each pair of successive sub-lines (50, 51) and exhibiting a median compensation value, and
   - a final dispersion compensation device (56) disposed at the end of the line between the last segment (53) of the last sub-line (51) and the input of the second node (52), and exhibiting a final compensation value,

   *characterized in that* the initial compensation value is a linear combination of the initial compensation values of the sub-lines (50, 51) as optimized for said sub-lines which are used alone.

2. An optical line (40) according to claim **1**, wherein the intermediate compensation value for a sub-line (50, 51) is equal to the intermediate compensation value as optimized for said sub-line (50, 51) used alone.

3. An optical line (40) according to claim **1** or **2**, wherein the median compensation value is equal to the intermediate compensation value of the immediately previous sub-line (50).

4. An optical line (40) according to any one of the claims **1** to **3**, wherein the final compensation value is such that the dispersion is canceled out within the second node (52).

5. An optical line (40) according to any one of the claims **1** to **4**, wherein the weight, within said linear combination, of the initial compensation value of the sub-line (50, 51) is equal to a figure indicative of the dispersion of said sub-line (50, 51) divided by that same figure for the entire line (40).

6. An optical line (40) according to claim **5**, wherein the figure indicative of the dispersion is integrated power.

7. An optical line (40) according to claim **5**, wherein the figure indicative of the dispersion is non-linear phase.

8. An optical line (40) according to claim **5**, wherein the figure indicative of the dispersion is weighted non-linear phase.

9. An optical line (40) according to any one of the claims **6** to **8**, wherein the initial compensation value is determined at +/-100ps/nm.

10. A method for determining compensation values for an optical line (40) connecting a first node (41) and a second node (52) of a transparent network, comprising

   - a first sub-line (50) made up of a first plurality of optical fiber segments (43) of one type connected in succession by interspersing between each pair of successive segments (43) a first intermediate dispersion compensation device (45) exhibiting a first intermediate compensation value,
   - at least one second sub-line (51) made up of a second plurality of optical fiber segments (53) of a type distinct from the type of the immediately previous sub-line, connected in succession by interspersing between each pair of successive segments (53) a second intermediate dispersion compensation device (55) exhibiting a second intermediate compensation value,

- an initial dispersion compensation device (44) disposed at the start of the line between the output of the first node (41) and the first segment (43) of the first sub-line (50) and exhibiting an initial compensation value,

- at least one median dispersion compensation device (47) disposed between each pair of successive sub-lines (50, 51) and exhibiting a median compensation value, and

- a final dispersion compensation device (56) disposed at the end of the line between the last segment (53) of the last sub-line (51) and the input of the second node (52), and exhibiting a final compensation value,

***characterized in that*** the initial compensation value is a linear combination of the initial compensation values of the sub-lines (50, 51) as optimized for said sub-lines (50, 51) which are used alone.

10

13          13          13

11

14          15          15          16          12

FIG. 1

11

13          13

13

13          16

14

15          15          12

FIG. 2

EP 2 367 305 A1

FIG. 3

8

FIG. 4

FIG. 5

FIG. 6

# EP 2 367 305 A1

**Europäisches Patentamt**
**European Patent Office**
**Office européen des brevets**

## EUROPEAN SEARCH REPORT

Application Number

EP 11 15 8335

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 883 172 A1 (ALCATEL LUCENT [FR]) 30 January 2008 (2008-01-30) * paragraphs [0028] - [0030] * * figures 3-5 * ----- | 1-10 | INV. H04B10/18 |
| A | US 2009/123153 A1 (EDIRISINGHE SUMUDU GEETHIKA [GB] ET AL) 14 May 2009 (2009-05-14) * figures 1,7A,7B * * paragraphs [0033], [0045], [0069] - [0070] * ----- | 1-10 | |
| A | EP 2 088 698 A1 (NEC CORP [JP]) 12 August 2009 (2009-08-12) * paragraphs [0031], [0034], [0047] * * figures 1, 5 * ----- | 1-10 | |

TECHNICAL FIELDS SEARCHED (IPC)

H04B

The present search report has been drawn up for all claims

| Place of search | Date of completion of the search | Examiner |
|---|---|---|
| Munich | 4 August 2011 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 367 305 A1

## ANNEX TO THE EUROPEAN SEARCH REPORT
## ON EUROPEAN PATENT APPLICATION NO.

EP 11 15 8335

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2011

| Patent document cited in search report | | Publication date | Patent family member(s) | | Publication date |
|---|---|---|---|---|---|
| EP 1883172 | A1 | 30-01-2008 | NONE | | |
| US 2009123153 | A1 | 14-05-2009 | CA | 2700763 A1 | 23-04-2009 |
| | | | CN | 101828350 A | 08-09-2010 |
| | | | EP | 2210357 A1 | 28-07-2010 |
| | | | WO | 2009050465 A1 | 23-04-2009 |
| | | | JP | 2011501549 A | 06-01-2011 |
| | | | KR | 20100096088 A | 01-09-2010 |
| EP 2088698 | A1 | 12-08-2009 | CN | 101505193 A | 12-08-2009 |
| | | | JP | 2009188835 A | 20-08-2009 |
| | | | US | 2009202257 A1 | 13-08-2009 |